# EUROPEAN PATENT APPLICATION

(11) **EP 4 607 744 A1**
(43) Date of publication of application: **27.08.2025**
(21) Application number: 24158842.5
(22) Date of filing: 21.02.2024
(51) Int. Cl.: H02J 7/00, H02H 7/18

(54) **ENERGY STORAGE SYSTEM AND METHOD FOR OPERATING A PROTECTION CIRCUIT IN AN ENERGY STORAGE SYSTEM**

(71) Applicant: Hitachi Energy Ltd, 8050 Zürich (CH)
(72) Inventor: SODERBLOM, Anton, 74943 Enköping (SE); BAKAS, Panagiotis, 72212 Västerås (SE); ZHANG, Zichi, 72358 Västerås (SE); BAI, Haofeng, 72348 Västerås (SE); INGESTROM, Gunnar, 72245 Västerås (SE); NOISETTE, Philippe, 1228 Plan-les-Ouates (CH)
(74) Representative: Epping - Hermann - Fischer

(57) **Abstract**

An energy storage system (1) comprising a plurality of energy storage units (2, 2n) and comprising one or more protection circuits (3, 3n, 4) enabling bypassing one or more of the energy storage units (2, 2n), wherein at least one of the protection circuits (3, 3n, 4) comprises a first switch (S1, Sn1, Sa) and a first resistor (R1, Rn1, Ra) electrically connected in series and comprises a second switch (S2, Sn2, Sb) electrically connected in series with the first switch (S1, Sn1, Sa) and electrically connected in parallel with the first resistor (R1, Rn1, Ra).

## Description

The present disclosure relates to an energy storage system and a method of operating an energy storage system for bypassing one or more energy storage units in the energy storage system. Such an energy storage system comprises a plurality of energy storage units. The energy storage units may comprise one or more energy storage cells like supercapacitors or batteries.

Energy storage systems may be used for providing electric energy to a power grid. In power grid applications, power demand spans over a wide range from a few Megawatts to hundreds of Megawatts. This may require a very high number of energy storage units, which can be built up in different topologies. The energy storage units can be arranged as an energy storage system in the form of racks or cabinets, for example. The arrangement may be chosen depending on transportation or testing requirements.

The racks or cabinets can be capable of storing very high energies, e.g. in the Megajoule range, and of delivering very high power, e.g. in the Megawatt range. During discharging events, e.g. during a fault or during maintenance, a risk could be imposed to humans or to equipment in the vicinity, due to the forces and heat generated through this event. Therefore, it is of highest importance to limit the current and make the discharging safe, both during normal operation and during maintenance of the energy storage system.

EP 4 170 852 A1 discloses a fault response bypass system for an energy storage bank comprising a discharging circuit for discharging modules of the energy storage bank. The bypass system comprises a discharging switch to bypass the energy storage modules. WO 2022/100 822 A1 discloses a distributed protection and bypass circuit for an energy storage system comprising a circuit for discharging the energy storage unit and a switch for disconnecting an energy storage unit from the main circuit. US 9789782 B1 discloses a battery module disconnect arrangement comprising a switch for bypassing and disconnecting battery modules.

Embodiments of the disclosure relate to an energy storage system with an improved protection circuit allowing bypassing one or more energy storage units of the energy storage system.

According to a first aspect, an energy storage system comprises a plurality of energy storage units and comprises one or more protection circuits enabling bypassing one or more of the energy storage units. At least one of the protection circuits comprises a first switch and a first resistor electrically connected in series and comprises a second switch electrically connected in series with the first switch and electrically connected in parallel with the first resistor.

The energy storage unit may comprise one or more energy storage cells like capacitors, e.g. supercapacitors, or batteries for example. The energy storage units may be electrically connected in series, in parallel or in other configurations to each other. The protection circuit may be connected in parallel with one or more of the energy storage units.

By providing a first switch and a second switch connected in series in the protection circuit, accidental direct short circuiting by closing only one of the switches can be prevented. The energy storage system may be configured such that direct bypassing the one or more associated energy storage units is only enabled when the first switch and the second switch are closed. An associated energy storage unit is an energy storage unit that is to be bypassed by the protection circuit. In this regard, direct bypassing means that a resistor is not present in the current path for bypassing the energy storage unit. Direct bypassing may also mean short circuiting the energy storage unit.

It is also possible that further switches may have to be closed in addition to the first and second switches to enable bypassing the energy storage unit. The further switches may be connected in series to the first and second switches. By providing further switches, the risk for accidental short circuiting can be further reduced.

By providing the first resistor in series with the first switch and in parallel to the second switch, the first resistor can be switched into a current path or removed from a current path through the protection circuit depending on the status of the switches, i.e., depending on if the switches are closed or open. When only a current path leading through a resistor is provided, the current through the protection circuit is limited, thus allowing a safe discharging process. When a sufficient discharge has been achieved, a short-circuiting current path can be opened by changing the status of one or more switches.

At least one of the protection circuits may be a unit protection circuit for enabling bypassing one of the energy storage units and enabling simultaneous operation of the energy storage system. The unit protection circuit may enable both discharging and bypassing the associated energy storage unit. The unit protection circuit may be connected in parallel only to the associated energy storage unit. When current flow is enabled through the unit protection circuit, both the operational current and the discharge current may flow over the unit protection circuit.

Thereby, the availability of the energy storage system may be ensured such that no system shutdown is required when only a part or part of the energy storage system are discharged while the rest of the system is still up and running. As an example, one or more protection circuits may be active when associated energy storage units are faulty.

It is possible that each of the energy storage units has an own protection circuit. It is also possible that several energy storage units share a protection circuit such that the protection circuit bypasses several energy storage units when activated.

At least one of the protection circuits may be a system protection circuit for enabling bypassing all of the energy storage units. The system protection circuit may be provided for maintenance of the energy storage system. The system protection circuit may be also activated when one or more of the energy storage units have failed and enable discharging.

The energy storage system may comprise one or more unit protection circuits and a system protection circuit. As an example, a unit protection circuit may be provided for each energy unit in addition to a system protection circuit. The design of the protection circuits can be different. As an example, the unit protection circuits may have a more complex design than the system protection circuit.

At least one of the protection circuits may comprise at least one further resistor for allowing varying the resistance value of a current path through the protection circuit. The resistance value may be varied by changing the status of one or more of the switches. The protection circuit may comprise one or more further switches for varying the resistance value by opening or closing respective current paths.

As an example, the resistance value may be gradually decreased to limit the current depending on the discharge current. By decreasing the resistance value, the discharge process can be accelerated. Furthermore, the risk of exceeding the ratings of the switch devices and/or the energy storage units, e.g. by overvoltage and/or overcurrent can be reduced. At the same time, a high operational current is possible. Also the risk of exceeding ratings of the energy storage units can be reduced.

The protection circuit may be configured such that the further resistor can be connected in parallel to the first resistor by changing the status of one or more of the switches. As an example, in a first step only a current path through the first resistor may be provided. In a second step, a further switch may be closed to allow a further, parallel current path through the further resistor. Thereby, the overall resistance value can be gradually reduced. As a last step, the current path leading only through the switches but not through resistors may be enabled.

It is also possible that several further resistors are connected in parallel to the first resistor. Each of the further resistors may be connected in an additional branch.

The protection circuit may be configured such that the further resistor can be connected in series to the first resistor by changing the status of one or more of the switches. Also here, gradually increasing the resistance value is possible by gradually disconnecting one or more further resistors from the current path.

One or more further switches of the protection circuit may be connected in parallel to the first switch. As an example, the protection circuit may comprise one or more parallel branches to the first switch and first resistor, wherein each of the parallel branches comprises a further switch and a further resistor.

It is also possible that one or more further switches are connected in series to the first switch. As an example, further resistors can be connected in parallel to the first resistor and further switches can be connected in series to the first switch. Depending on the layout, by activating the further switches, the further resistors current paths through the parallel resistors can be enabled. As a further example, further resistors can be connected in series to the first resistor and further switches can be connected in series to the first switch. Depending on the layout, by activating the further switches, current paths bypassing the further resistors can be opened.

It is also possible that the protection circuit allows connecting the further resistor in series to the first resistor and in parallel to the first resistor by changing the status of one or more switches. In a first status, the further resistor may be connected in series and in a second status, the further resistor may be connected in parallel.

The protection circuit may comprise an overvoltage protection device connected in parallel to the first resistor. Thereby, the current stress through the associated energy storage unit can be decreased.

According to a further aspect, a method for operating a protection circuit in an energy storage system is disclosed. The protection circuit and the energy storage system may comprise any functional and structural features of the protection circuit and energy storage system disclosed in the foregoing. The protection circuit comprises two or more switches and a first resistor, wherein one of the switches is a first switch connected in series to the first resistor and in series to the second switch. The second switch and the first resistor are connected in parallel.

During normal operation of the energy storage system, at least two of the switches of the protection circuit may be open. For some embodiments, the first switch and the second switch are open. It is also possible that all switches are open. The protection circuit is activated by closing at least one of the switches for initiating bypassing one or more of the energy storage units. At least a second one of the switches is closed after or at the same time. As an example, the first switch may be closed first and, thereafter, the second switch is closed.

The protection circuit may comprise at least one further resistor and at least one further switch. The switches of the protection circuit may be closed in a sequential order such that a resistance value in a bypassing path is gradually decreased.

By this operation method, a discharging process can be conducted in a controlled way. In particular, accidental short-circuiting by closing only a single switch may be prevented. Furthermore, the resistance value in a current path through the protection circuit can be controlled such that operation of the energy storage system is possible while discharging of one or more energy storage units is enabled. By adjusting the resistance value during the operation, the risk of exceeding ratings of switching devices and energy storage units can be reduced while discharging can be accelerated.

The present disclosure comprises several aspects and embodiments. Every feature described with respect to one of the aspects and embodiments is also disclosed herein with respect to the other aspects and embodiments, even if the respective feature is not explicitly mentioned in this context.

Further features, refinements and expediencies become apparent from the following description of the exemplary embodiments in connection with the figures. In the figures, elements of the same structure and/or functionality may be referenced by the same reference signs. It is to be understood that the embodiments shown in the figures are illustrative representations and are not necessarily drawn to scale.
- Figure 1: shows an embodiment/example of an energy storage system in a schematic diagram,
- Figure 2: shows an embodiment of an energy storage system in a schematic diagram,
- Figures 3A to 3C: show method steps for operating the energy storage system of Figure 2 for discharge in schematic diagrams,
- Figure 4: shows a further embodiment of a protection circuit for an energy storage system in a schematic diagram,
- Figures 5A to 5F: show method steps for operating the protection circuit of Figure 4 for discharge in schematic diagrams,
- Figure 6: shows a further embodiment of a protection circuit for an energy storage system in a schematic diagram,
- Figure 7: shows a further embodiment of a protection circuit for an energy storage system in a schematic diagram,
- Figure 8: shows a further embodiment of a protection circuit for an energy storage system in a schematic diagram,
- Figure 9: shows a further embodiment of a protection circuit for an energy storage system in a schematic diagram.

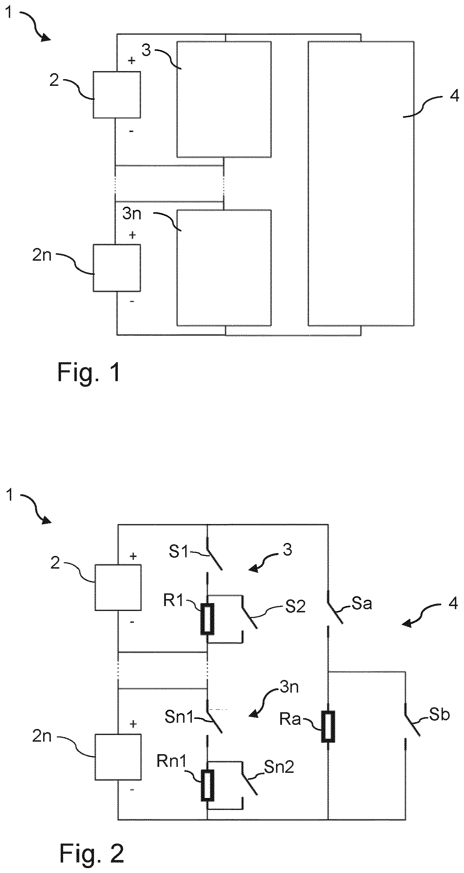

Figure 1 shows an energy storage system 1 in a conceptional diagram. The energy storage system 1 may be in the form of a rack or cabinet, for example. The energy storage system 1 may be configured for providing electrical energy to a power grid, an electric or hybrid vehicle, or other electrically powered system or device. The energy storage system 1 may comprise power terminals for connection to an external device for providing electrical energy to the device.

The energy storage system 1 comprises a plurality of energy storage units 2, 2ₙ. Each energy storage unit 2, 2ₙ may comprise one or more energy storage cells like a battery, a capacitor or a fuel cell. A capacitor may be a supercapacitor, for example. The energy storage units 2, 2ₙ may be connected in series or parallel to each other.

For each energy storage unit 2, 2n, an electric protection circuit 3, 3n, also denoted as unit protection circuit, may be provided. The respective protection circuit 3, 3n is connected in parallel to the associated energy storage unit 2, 2n. The respective electric protection circuit 3, 3n enables bypassing the associated energy storage unit 2, 2n, e.g. in case of a fault of the energy storage unit 2, 2n. All other ones of the energy storage unit 2, 2n are not bypassed. Accordingly, each energy storage unit 2, 2n has its own protection circuit 3, 3n enabling operation of the other energy storage units 2, 2n.

Accordingly, healthy energy storage units can still be operated, while a detective energy storage unit is discharging. As an example, a defective energy storage unit may be a string of energy storage modules.

In addition to that, the energy storage system 1 comprises a system protection circuit 4, which is electrically connected in parallel to all energy storage units 2, 2n. The system protection circuit 4 is also electrically connected in parallel to all protection circuits 3, 3n. The system protection circuit 4 enables bypassing all energy storage units 2, 2n at once. The system protection circuit 4 can be used also for maintenance.

Figure 2 shows an embodiment of an energy storage system 1 with the protection circuits 3, 3n and the system protection circuit 4 shown in detail.

The protection circuit 3 comprises a first switch S1 and a first resistor R1 connected in series to each other. Furthermore, the protection circuit 3 comprises a second switch S2. The second switch S2 is connected in parallel to the first resistor R1 and in series to the first switch S1.

The configuration of the protection circuit 3 is a double bypass circuit, allowing bypassing the energy storage unit 2 via two paths, when the respective switches S1, S2 are closed. The first path is via the first switch S1 and the first resistor R1 and the second path is via the first switch S1 and the second switch S2.

The first path is via the first resistor R1, while the second path provides short-circuiting without a resistor component in the path. By the connection of the second switch S2 in parallel to the first resistor R1 and not in parallel to the first switch S1, direct short circuiting by mistake is made more difficult than in a design where a bypass switch is connected in parallel to an energy storage unit without further switches in the path. In the shown embodiment, both the first switch S1 and the second switch S2 have to be closed for short circuiting the energy storage unit 2.

Furthermore, by providing the resistor R1 in the first path, current limitation is provided during discharge of the first electric storage unit 2. In addition to that, continuous operation of the energy storage system 1 is possible when the switch S1 is closed, either via the resistor R1 or bypassed when the second switch S2 is also closed.

In the shown embodiment, every protection circuit 3, 3n, 4 has the same structure. However, also in this case, the resistance values and types of switches may be different for the different protection circuits 3, 3n, 4. As an example, the first resistor Ra of the system protection circuit 4 may have a high resistance value for slow discharge at very low current, where low-cost switches Sa, Sb can be sufficient. The resistance values for the unit protection circuits 3, 3n may be lower and the switches S1, S2, Sn1, Sn2 may be more costly.

In the following the design and operation mode is described in detail for the protection circuit 3 but is corresponding for the other protection circuits 3n, 4. The system protection circuit 4 comprises the system first switch Sa, the system first resistor Ra and the system second switch Sb. The further protection circuit 3n comprises the first switch Sn1, the first resistor Rn1 and the second switch Sn2. In other embodiments, the design could be different between the protection circuits 3, 3n, 4. As an example, the system protection circuit 4 may have different design than the protection circuits 3, 3n for the individual energy storage units 2, 2n.

It is also possible that the energy storage system 1 comprises only one or more unit protection circuits 3, 3n or only a system protection circuit 4.

The protection circuits 3, 3n, 4 may be controlled by a control unit. The control unit may be part of the energy storage system or external.

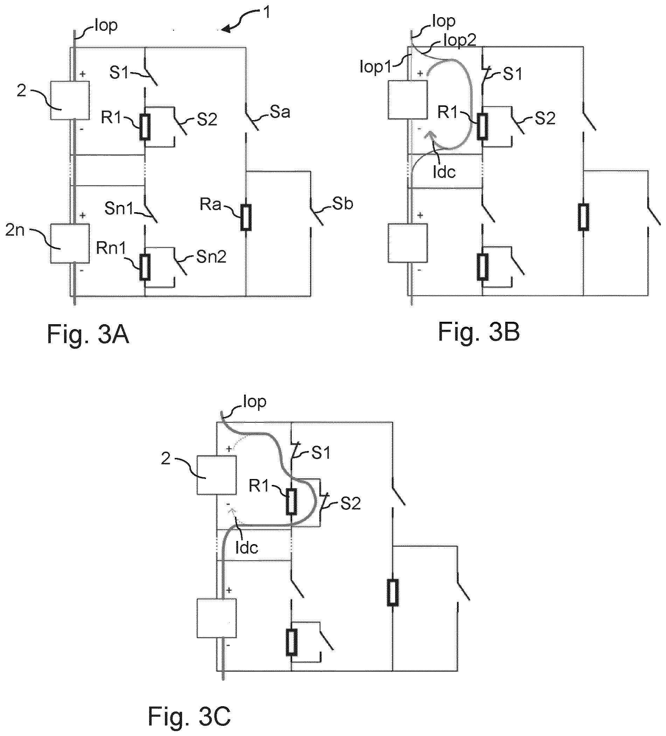

Figures 3A to 3C show method steps for operating the energy storage system of Figure 2.

In Figure 3A, the energy storage system 1 is in its operational mode, with all energy storage units 2, 2n in operation. All first switches S1, Sn1, Sa are open. Also the second switches S2, Sn2, Sb are open. The operational current Iop flows through the energy storage units 2, 2n without any bypassing.

As can be seen in Figure 3B, when the energy storage unit 2 is to be bypassed, e.g. due to a fault, the first switch S1 is closed. A discharging process starts, with a discharge current Idc flowing through the first switch S1 and the first resistor R1. The second switch S2 is still open. Thereby, accidental direct short circuiting when closing the first switch S1 can be prevented. The first resistor R1 has a resistance value such that the current is limited to a desired level.

At the same time, depending on the fault of the energy storage unit 2 and the resistance value of the resistor R1, the operational current Iop is split up into a first current Iop1 still flowing through the energy storage unit 2 and a second operational current Iop2 flowing through the first switch S1 and the first resistor R1.

Thus, continuous operation of the healthy part of the energy storage system 1 is possible, while the affected energy storage unit 2 is discharged.

In this operation step, the voltage level can be monitored to decide when the second switch S2 is closed.

In the step of Figure 3C, the second switch S2 is closed. The first switch S1 remains closed. The closing of the second switch S2 can depend on that a certain voltage level has been reached. The full or almost full operational current Iop flows now via the protection circuit 3. A small amount of the operational current Iop may still flow via the energy storage unit 2 and/or a small amount of discharge current Idc may still flow through the protection circuit 3.

Thus, continuous operation of the healthy part of the energy storage system 1 is enabled with the affected energy storage 2, 2n unit being bypassed.

The above method steps apply correspondingly also for bypassing the further energy storage unit 2n and/or the entire energy storage system 1.

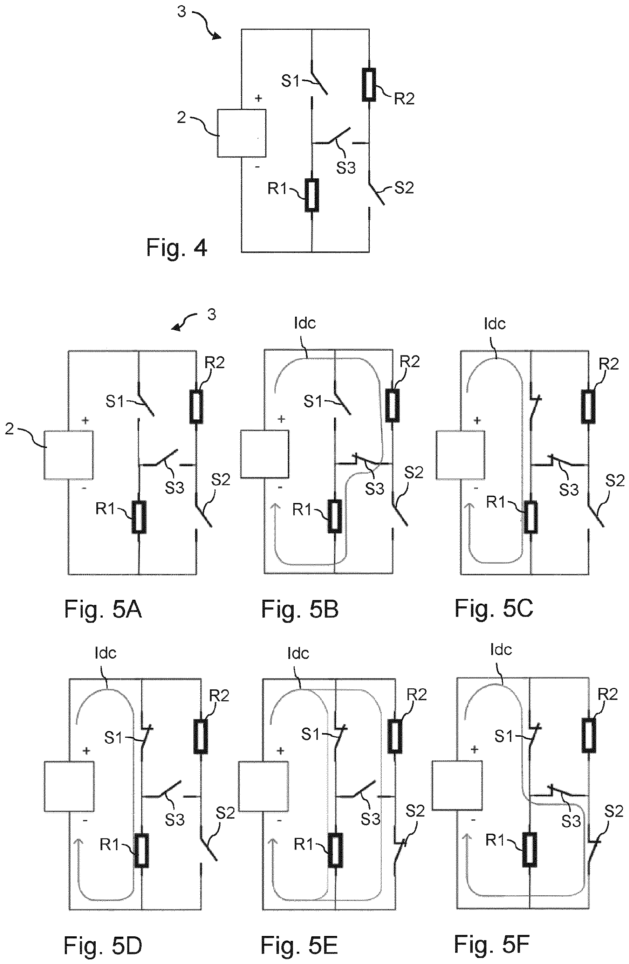

Figure 4 shows a further embodiment of a protection circuit 3 in an energy storage system 1. Also in this case, the protection circuit 3 can be a further protection circuit 3n and/or a system protection circuit 4.

The difference to the embodiment of Figure 2 is that a further resistor R2, also denoted as second resistor in the following, is provided in the protection circuit 3. In addition to that, a further switch S3, also denoted as third switch in the following, is provided which connects the resistors R1, R2 in series. By the second resistor R2 the current flowing through the energy storage system 1 and/or the energy storage units 2, 2n can be adjusted and limited in a more flexible way than with only one resistor. As an example, the current rating of the energy storage units 2, 2n may be lower than a peak current resulting from the sum of the system operational current Iop and the discharge current Idc.

When all switches S1, S2, S3 are closed, the energy storage unit 2, 2n is bypassed without current flowing through any resistors in the protection circuit 3. When the first switch S1 and the second switch S2 is closed, the resistors R1, R2 are connected in parallel and current is enabled to flow through both resistors R1, R2. When only one of the first switch S1 and the second switch S2 is closed while the third switch S3 is open, current flows only over one of the resistors R1, R2. When only one of the first switch S1 and the second switch S2 is closed while the third switch S3 is closed, current flows over the two resistors R1, R2 which are connected in series.

Figures 5A to 5F show a sequence of steps of one embodiment for operating the protection circuit 3 of Figure 4.

Figure 5A shows the protection circuit 3 when the associated electric storage unit 2, 2n is in normal operation. All switches of the protection circuit 3 are open. The full operational current Iop flows over the energy storage unit 2.

As shown in Figure 5B, when a fault is detected, the third switch S3 is closed while the first and second switches S1, S2 are maintained open. Thereby, the resistors R1, R2 are connected in series and the highest resistance value is achieved for current flowing through the protection circuit 3. Thereby, the peak value of the discharge current Idc can be kept as low as possible.

After that, as shown in Figure 5C, the first switch S1 is closed. Alternatively, the second switch S2 is closed. Thereby, the resistance value is decreased and discharging is accelerated. Accordingly, the time constant for discharging is lowered.

After that, as shown in Figure 5D, the third switch is opened to prepare for the next step.

After that, as shown in Figure 5E, the second switch S2 is closed to further accelerate discharging. Alternatively, when the second switch S2 was closed and the first switch S1 open, the first switch S1 is now closed.

After that, as shown in Figure 5F, the third switch is closed to complete the bypass. In this state, the current flows over the protection circuit 3 without a resistor R1, R2 in the current path.

In the shown example, the resistance value for current flowing through the protection circuit 3 is lowered stepwise. Thereby, peak values for the discharging current Iop occurring at the beginning of discharging can be limited. When the discharging current decreases over time, the resistance values are reduced such that discharging is accelerated.

In other embodiment, a different operating sequence may be provided. The selected sequence may depend on the current limits and ratio of operating current and discharge current.

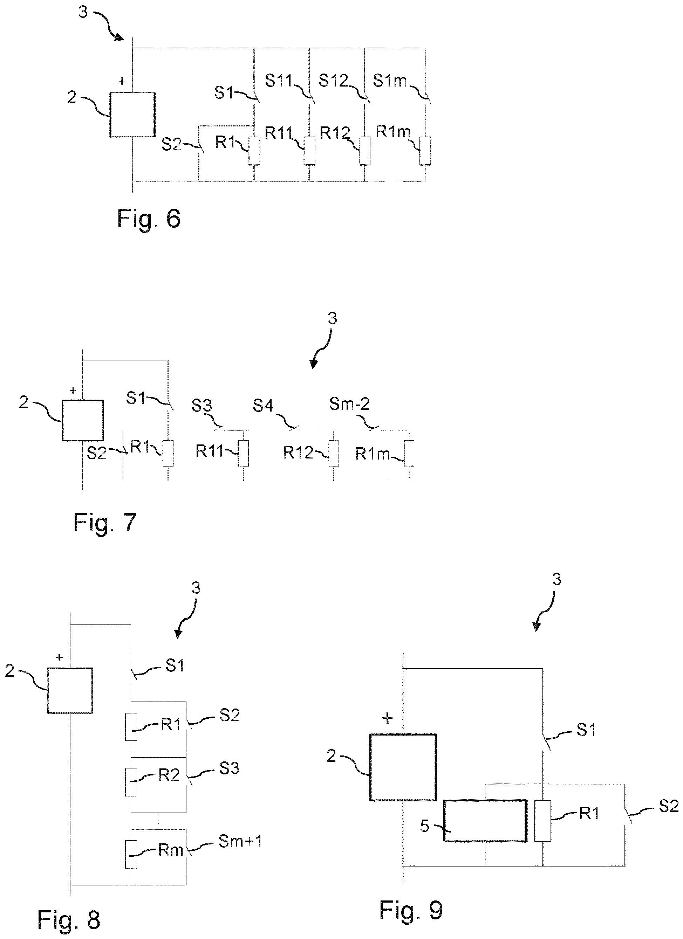

Figure 6 shows a further embodiment of a protection circuit 3 for an energy storage system 1. In this circuit variant, several branches are connected in parallel to the first switch S1 and the first resistor R1. Each parallel branch comprises a switch S11, S12, S1m and a resistor R11, R12, R1m. Thereby, the discharge resistance can be further varied.

The resistance values of the first resistor R1 and the further resistors R11, R12, R1m in the parallel branches can have the same resistance values or can have different resistance values. As an example, the resistance value of the first resistance R1 can be different than the resistance value of each other resistor R11, R12, R1m.

The bypass process is completed by turning on the second switch S2 while the first switch S1 is closed.

Some embodiments of operating modes are given in the following.

One example of an operation mode is to gradually reduce the discharge resistance for accelerating the discharge process. This reduction can be achieved by turning on the first switch S1 and then the parallel switches S11, S12, S1m in sequence, i.e., the first switch S1 is closed first to introduce the first resistor R1 in the current path, then S11 is closed to connect R11 in parallel to R1, then S12 is closed to connect R1, R11 and R12 in parallel and so on.

Another operation mode could be to discharge slowly by using only one of the resistors R1, R11, R12, R1m, e.g., using only the first resistor R1 by switching the first switch S1. This operation mode could be useful for discharging faulty energy storage units that should not be exposed to high current. It is worth to note that several resistors can be used to avoid rating the first resistor R1 for the full energy, e.g., start the discharge by R12 after closing S12, then open S12 and close S11 to continue with R11, then open S11 and close S1 to continue the discharge with R1. This mode requires that the switches S1-S1m feature current breaking capability.

Another operation mode could be to increase the discharge resistance in case that the discharging current flowing through the energy storage unit 2 needs to be increased to a very high value. In this case, increasing the resistance would lower the discharge current and thus reduce the current stress of the energy storage unit 2.

A few differences of the circuit variants of Figure 6 and of Figure 2 are summarized in the following.

For achieving the same discharge time, the current-carrying capability of S1 to S1m in Figure 6 can be lower than that of S1 in Figure 2, provided that the resistances in Figure 6 are selected properly. This comes at the downside of higher number of switches, but the total cost of the switches may not be higher.

One downside of the circuit in Figure 6 is that the first switch S1, which is in series to the second switch S2, which completes the bypass process, must have high current-withstand capability for remaining closed even during short circuits of other non-bypassed energy storage units. The current-withstand capability of the first resistor S1 could be reduced by employing a second switch, as the second switch S2, in parallel to each resistor R11, R12, R1m, in the parallel branches. However, in this case all second switches may need to have the same current-carrying capability, as simultaneous switching is challenging.

Figure 7 shows a further embodiment of a protection circuit 3 for an energy storage system 1. Also in this embodiment, several branches with resistors R11, R12, R1m connectable in parallel to the first resistor R1 are provided. However, further switches S3, S4 to Sm-2 are such that the resistance value can only be decreased sequentially by adding the resistors R11, R12, R1m. Accordingly, the discharge process can be stepwise accelerated.

For the circuit of Figure 7, the discharge process starts by turning on the first switch S1. Then the resistance value can be sequentially lowered by closing S3, S4 to Sm-2 sequentially, thereby connecting the resistors R11, R12, R1m in parallel to the first resistor R1.

The current-carrying capability of the first switch S1 can be low, as it can be turned on with all other switches in the off position, i.e., at the maximum resistance equal to R1. Finally, the bypass is achieved by closing the second switch S2, while the first switch S1 is closed.

The downside compared to the circuit of Figure 6 is that in case of a failed switch the achievable resistance decrease is highly dependent on the location of the failed switch. As an example, if the first further switch S3 cannot be turned on, then the resistance cannot be decreased at all, and the circuit effectively becomes the circuit of Figure 2.

Figure 8 shows a further embodiment of a protection circuit 3 for an energy storage system 1. Also here, the discharge resistance can be varied by opening and closing further switches S3 to Sm+1.

In the circuit, further resistors R2 to Rm are connected in series to the first resistor R1. Each of the further resistors R2 to Rm can by bypassed by closing an associated switch S3 to Sm+1, thereby opening a current path through the protection circuit 3 which bypasses the associated resistor R2 to Rm.

As an example for operation, the discharge resistance can be gradually decreased by sequentially closing the switches S2 to Sm+1. The bypass operation is completed by having all switches S1 to Sm+1 closed.

The downside compared to the circuits of Figure 2, Figure 6 and Figure 7 is that a failure of one of the switches S1 to Sm+1 leads to loss of the bypass circuit without any of the resistors R1 to Rm in the current path. The advantage compared to the circuit of Figure 2 is that a resistance value can be lower in case of failure of the second switch S2.

Figure 9 shows a further embodiment of a protection circuit 3 for an energy storage system 1. Compared to the embodiment of Figure 2, the protection circuit 3 here comprises an overvoltage protection device 5 connected in parallel to the first resistor R1 and in parallel to the second switch S2.

The overvoltage protection device 5 may be a varistor, for example. The overvoltage protection device 5 is provided for avoiding overvoltage of the energy storage unit 2 during bypass at high discharging current. This allows to select a high resistance value for the first resistor R1, which can be useful for reducing the current stress of the energy storage unit 2 when a high discharging current is needed at the same time as the bypass operation. When the voltage is above a certain level the overvoltage protection devices 5 becomes a low impedance conductor, and the current is diverted from the resistor into the overvoltage protection device 5 instead. At normal voltage conditions, the overvoltage protection device 5 will act as a high impedance component.

Any of the protection circuits 3, 3n for the energy storage units 2, 2n and the system protection circuit 4 can have the structure and mode of operation as disclosed for the specific embodiments described in connection with Figures 2 to 9. The protection circuits 3, 3n for the energy storage units 2, 2n can have a different structure than the system protection circuit 4. As an example, the system protection circuit 4 may have the basic structure shown in Figure 2 and the unit protection circuits 3, 3n may have one of the more complex structures of Figures 3 to 9. It is also possible that the unit protection circuits 3, 3n have different structures.

### Reference Signs

- 1: energy storage system
- 2: energy storage unit
- 2n: further energy storage unit
- 3: protection circuit
- 3n: further protection circuit
- 4: system protection circuit
- 5: overvoltage protection device

- S1: first switch (of first ES unit)
- R1: first resistor (of first ES unit)
- S2: second switch (of first ES unit)

- S11, S12, S1m: further switch (in parallel branch)
- R11, R12, R1m: further resistor (in parallel branch)
- R2, R3, Rm: further resistor (in series to first resistor)
- S3, S4, Sm+1: further switch (in series to first / second switch)

- Sn1: first switch of nth energy storage unit
- Rn1: first resistor of nth energy storage unit
- Sn2: second switch of nth energy storage unit

- Sa: first switch of system
- Sb: second switch of system
- Ra: first resistor of system

- Iop: operational current
- Iop1: first part of operational current
- Iop2: second part of operational current
- Idc: discharge current

## Claims

1. An energy storage system (1),
comprising a plurality of energy storage units (2, 2n) and comprising one or more protection circuits (3, 3n, 4) enabling bypassing one or more of the energy storage units (2, 2n),
wherein at least one of the protection circuits (3, 3n, 4) comprises a first switch (S1, Sn1, Sa) and a first resistor (R1, Rn1, Ra) electrically connected in series and comprises a second switch (S2, Sn2, Sb) electrically connected in series with the first switch (S1, Sn1, Sa) and electrically connected in parallel with the first resistor (R1, Rn1, Ra).

2. The energy storage system (1) of claim 1,
being configured such that short circuiting the associated one or more energy storage units (2, 2n) is only enabled when both the first switch (S1, Sn1, Sa) and the second switch (S2, Sn2, Sb) are closed.

3. The energy storage system (1) of any of the preceding claims,
wherein at least one of the protection circuits (3, 3n, 4) is a unit protection circuit (3, 3n) for enabling bypassing one of the energy storage units (2, 2n) and simultaneous operation of the energy storage system (1).

4. The energy storage system (1) of any of the preceding claims,
wherein at least one of the protection circuits (3, 3n, 4) is a system protection circuit (4) for enabling bypassing all of the energy storage units (2, 2n).

5. The energy storage system (1) of any of the preceding claims,
wherein at least one of the protection circuits (3, 3n, 4) comprises at least one further resistor (R2 to Rm, R11 to R1m) for allowing varying the resistance value of a current path through the protection circuit (3, 3n, 4).

6. The energy storage system (1) of claim 5,
wherein electrically connecting the further resistor (R2 to Rm, R11 to R1m) in parallel to the first resistor (R1) is enabled by changing the status of one or more switches (S1, S2, S3 to Sm+1, S11 to S1m).

7. The energy storage system (1) of any of claims 5 or 6,
wherein electrically connecting the further resistor (R2 to Rm, R11 to R1m) in series to the first resistor (R1) is enabled by changing the status of one or more switches (S1, S2, S3 to Sm+1, S11 to S1m).

8. The energy storage system (1) of any of claims 5 to 7,
wherein electrically connecting the further resistor (R2 to Rm, R11 to R1m) in series and in parallel to the first resistor (R1) is enabled by respectively changing the status of one or more switches (S1, S2, S3 to Sm+1, S11 to S1m).

9. The energy storage system of any of claims 5 to 8,
wherein the protection circuit (3, 3n, 4) comprises at least one further switch (S3 to Sm+1, S11 to S1m) for changing the resistance value for the current path.

10. The energy storage system of claim 9,
wherein the further switch (S3 to Sm+1, S11 to S1m) is connected in parallel to the first switch (S1).

11. The energy storage system of claim 9,
wherein the further switch (S3 to Sm+1, S11 to S1m) is connected in series to the first switch (S1).

12. The energy storage system of any of the preceding claims,
wherein the protection circuit (3, 3n, 4) comprises an overvoltage protection device (5) connected in parallel to the first resistor (R1).

13. A method for operating a protection circuit (3, 3n, 4) for bypassing one or more energy storage units (2, 2n) in an energy storage system (1),
the energy storage system (1) comprising a plurality of energy storage units (2, 2n) and comprising one or more protection circuits (3, 3n, 4) enabling bypassing one or more of the energy storage units (2, 2n),
wherein at least one of the protection circuits (3, 3n, 4) comprises two or more switches (S1, Sn1, Sa, S2, S3 to Sm+1, S11 to S1m) comprising a first switch (S1, Sn1, Sa) and a second switch (S2, Sn2, Sb), and comprises a first resistor (R1, Rn1, Ra),
wherein the first switch (S1, Sn1, Sa) and the first resistor (R1, Rn1, Ra) are electrically connected in series and wherein the first switch (S1, Sn1, Sa) and the second switch (S2, Sn2, Sb) are electrically connected in series and wherein the second switch (S2, Sn2, Sb) and the first resistor (R1, Rn1, Ra) are electrically connected in parallel,
the method comprising the steps of:
closing at least one of the switches (S1, Sn1, Sa, S2, S3 to Sm+1, S11 to S1m) for initiating bypassing one or more of the energy storage units (2, 2n) and
closing at least a second one of the switches (S1, Sn1, Sa, S2, S3 to Sm+1, S11 to S1m) after or at the same time.

14. The method of claim 13,
wherein the first switch (S1) is closed for initiating bypassing and the second switch (S2) is closed after or at the same time as the first switch (S1).

15. The method of any of claims 13 or 14,
wherein the protection circuit comprises at least one further resistor (R2 to Rm, R11 to R1m) and at least one further switch (S3 to Sm+1, S11 to S1m), wherein the switches (S3 to Sm+1, S11 to S1m) are closed in a sequential order such that the resistance value in a bypassing path is gradually decreased.
